Europäisches Patentamt

European Patent Office

Office européen des brevets

(19)

(11) Numéro de publication : **0 437 414 A1**

(12) # DEMANDE DE BREVET EUROPEEN

(21) Numéro de dépôt : 91500002.0

(51) Int. Cl.⁵ : **E01F 15/00, F16F 7/12**

(22) Date de dépôt : 09.01.91

(30) Priorité : 11.01.90 ES 9000077

(43) Date de publication de la demande :
17.07.91 Bulletin 91/29

(84) Etats contractants désignés :
AT BE CH DE DK FR GB GR IT LI LU NL SE

(71) Demandeur : **Guerra, Antonio**
**Castillo de Ocio n 6 - 5**
**E-01007 Vitoria (ES)**

(72) Inventeur : **Guerra, Antonio**
**Castillo de Ocio n 6 - 5**
**E-01007 Vitoria (ES)**

(54) Dispositif protecteur d'impactes pour barrières garde-rails.

(57) Le dispositif protecteur d'inpactes pour barrières garde-rails, a comme but de reduire les effects des collisions des vèhicules et des personnes contre cettes barrières.

Il est conçu pour absorber les petits impactes contre les barrières de protection, en èvitant le contact direct entre les vèhicules (ou personnes) et le profil métallique de la barrière.

Composé d'un élèment stratifié, allongé élatiquement déformable, adossé à la barrière. Fait en caoutchouc, poliuretan ou similar, avec une structure alvèolaire intérieure, en forme de nid d'abeille.

EP 0 437 414 A1

## DISPOSITIF PROTECTEUR D'IMPACTES POUR BARRIERES GARDE - RAILS

Le présent model d'utilité fait éférence a un dispositif protecteur d'impactes pour barrières garde-rails, étant son but de reduire les effects des collisions des voitures contre cettes barrières, autant pour les véhicules que pour les personnes occupantes.

Les barrières garde-rails sont composés d'un profil ondulant métallique, acroché sur des poteaux aussi métalliques ancrés pour terre. Elle sont placés de deux cotés parallèles à la voi circulatoire qu'on essaie de protéger.

Pour sa prope nature, et quand les impactes ne sont pas très forts, la regité de la barrière produit des dégâts sur les carroseries des véhicules, et même aux personnes, surtout lors qu'il s'agit d'une motociclette.

Le But du présent model d'utilité est le développement d'un dispositif capable d'absorber les petits impactes des véhicules contre les barrières de protection, en empêchant le contact directe avec le profil métallique.

De cette façon est possible d'eviter les dégats que l'impacte puisse produire sur la carroserrie, et les occupants quand il s'agit d'un motociclette.

Le dispositif de l'invention permet de reduire les effets de l'impacte surtout, comme il a dejà ètè indiqué quand celui - ci n'est pas très fort.

Le dispositif est constitué d'un élèment stratifié allongé élastiquement déformable, fixé a la barrière au long de la surface du profil, face vers la route ou voi circulatoire. Cet élèment a une section transversale presque rectangulaire, d'hauteur égal ou légerement supérieur au profil de la barrière, qui restera complètement recouvert.

L' élèment stratifié est composé de deux parois paralleles longitudinales, d'un matériel elastiquement déformable, et remplies d'un materiel des mémes caracteristiques entre les deux, composé d'une structure en forme de nid d' abeilles (cellules hexagonales parallèles aux parois externes). Toute cette structure sera formeé preferement en cautchoue ou similaire.

La paroi antérieure sera de surface libre plate, tandis que la paroi postérieure peut etre composé d'un grossissement intermediaire longitudinal, à coupe transversal courbo - convexe, assemblable à la partie intermediaire courbo - concave du profil de la barrière. La paroi posterieure portera aussi des vis inserés, lesquels ressortissent perpendiculairement, a fin d'etre fixe aux poteaux de la barrière.

L' élèment stratifié sera completé avec des bandes de formeture supérieure et inférieure, élastiquement deformables, aussi en cautchoue ou similaire, qui s'adossent et fixent aux bord des parois extérieures et au rembourrage intermédiaire.

Avec cette constitution, quand un véhicule impacte contre la barrière de protection, c'est l'élèment stratifié qui reçoit dabord l'impacte. La paroi antérieure de l'élément stratifié, transmet la pression ou rembourrage alvéolaire lequel se déforme élastiquement, en absorbant l'effect de l'impacte, avant que le profil métallique accomplisse son role de retention. De cette manière, quand les impactes ne sont pas d'une grande magnitude, l'élèment protecteur absorbe pratiquemment la totalité de l'effect du coup, evitant les possibles dégats dans la carroserie du véhicule et aux occupants produits par le contact direct avec les élèments métalliques de la barrière.

Les caractéristiques du dispossitif de l'invantion seront mieux comprirres parmi la suivante description, faite en référence aux dessins ci-joints, où on montre une possible forme de realisation, donnèe a titre d'example non limitative.

Aux dessins :

La figure 1 est une vùe en perspective du dispositif protecteur de l'invention, placè sur une barrière garde-rails.

La figure 2, est une coupe transversal de l'ensemble representè à la figure 1.

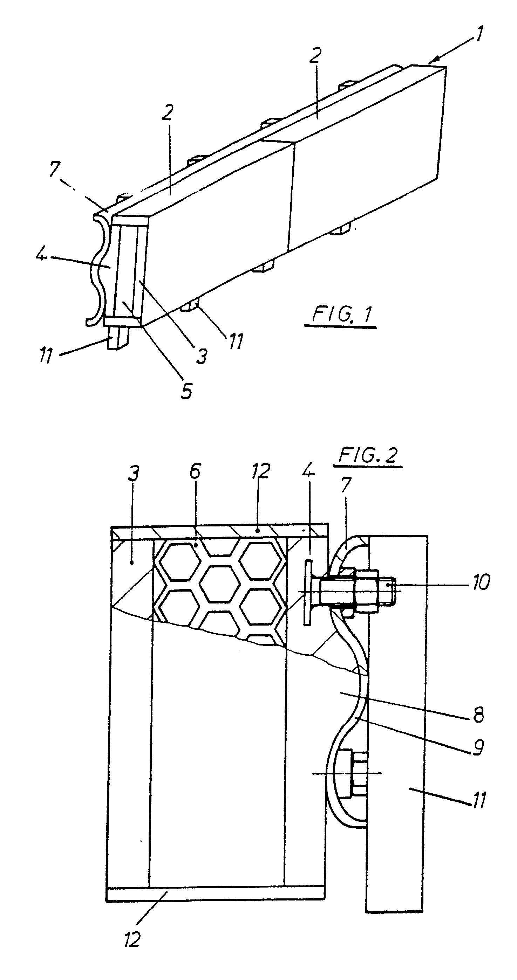

Le dispositif protecteur de l'invention est formè d'un élèment stratifiè allongè (numèro 1 a la figure 1), qui peut etre composé de travées modulaires consecutives (2).

Cet élèment stratifié est à nature déformable et composé d'une paroi antérieure (3) et posterieure (4), paralleles, qui délimitent un espace intermediaire(5) composé d'une structure alvéolaire (numèro 6 à la figure 2) en forme de nid d'abeilles, de cellules hexagonales, paralleles aux parois (3 et 4).

L' élèment décrit, a une coupe transversal presque rectangulaire, d'hauter ègal ou légèrement plus grande à celle du profil métallique (7) de la barrière.

La paroi postèrieure (4) de l'élèment protecteur prèsente un grossissement longitudinal extérieure (8) à surface CURBO - CONVEXE adaptable à la travée central COURBO - CONCAVE (9) du profil mètallique (7) de la barrière. En plus la paroi postèrieure (4) porte des vis fixés (10) à fin d'acrocher lélèment aux poteaux (11) de la barrière.

Les parois (3 et 4) et le rembourrage intermédiaire (6) sont attachés entre eux, restant l'ensemble fermé supérieur et inférieurement parmi des bandes (12) fixées aux parois (3 et 4) et au rembourrage (6).

Tous les composantes du dispositive de protection sont élastiquement déformables, étant préférement construits en caoutchouc.

Le dispositif de l'invention s'etend tout au long de la barrière de protection, étant la paroi postérieure (4) du dispositif adossé et fixe à la surface du profil métallique (7) de la barrière que donne sur la voi circulatoire. Le dispositif protecteur (1) peut etre d'une longueur indefinie ou bien etre contruit en travées qui s'adossent pour leus bords transversales à fin de former la surface protectrice longitudinale de la barrière.

**Revendications**

1. - Dispositif protecteur d'impactes pour barrières garde-rails, lequelles sont formées d'un profil métallique ondulant, placées parallelement au long de la voi circulatoire à protéger, sur de poteaux métalliques ; composé d'un élèment stratifié allongé, élastiquement déformable, adossé à la barrière au long de la surface du profil qui donne vers la voi circulatoire, dont l'élèment est en coupe transversale aproximativement rectangulaire, d'hauteur égal ou un peut plus grande à celle du profil de la barrière ; composé de deux parois paralleles longitudinales, antérieur et posterieur, à base d'un matériel élastiquement déformable, et d'un rembourrage intermédiaire aussi élastiquement déformable formé d'une structure alveolaire en forme de nid d'aveille, de cellules hexagonales, paralleles aux parois externes du meme.

2. - Dispositif selon la revindication 1, dont la paroi posterieure presente, exterieurement, un grossissement intermédiaire longitudinal à coupe transversal COURBO-CONVEXE, adaptable à la travée intermediaire COURBO-CONCA E du profil de la barrière.

3. - Dispositif selon les revindications 1 et 2, caracterisé pour une paroi postérieure avec des vis inserés qui ressortissent perpendiculairement à la surface de cette paroi.

4. - Dispositif selon la revindication 1, caractérisé parce que l'élèment stratifié est fermé superieur et inférieurement parmi des bandes en materiel élastique déformable, que s'adossent et fixent aux bords des parois extérieures et au rembourrage intermédiaire.

_FIG. 1_

_FIG. 2_

Office européen
des brevets

**RAPPORT DE RECHERCHE EUROPEENNE**

Numero de la demande

EP    91 50 0002

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | CH-A-432 573 (FERENC HOLECZ)<br>* colonne 3, ligne 26 - ligne 45; figures *<br>--- | 1,2 | E01F15/00<br>F16F7/12 |
| Y | DE-A-2 028 295 (K.H. VAHLBRAUK)<br>* page 6, ligne 18 - ligne 25 *<br>* page 7, alinéa 5; figure 3 *<br>--- | 1,2 | |
| A | FR-A-2 460 365 (SOCIETE CIVILE DαEQUIPEMENT PUBLIC)<br>* page 7, ligne 26 - ligne 33 *<br>* page 8, ligne 34 - page 9, ligne 11; figure 4 *<br>--- | 1-3 | |
| A | FR-A-2 277 277 (SAAB-SCANIA)<br>* page 7, ligne 23 - ligne 30; figures *<br>----- | 1,4 | |

**DOMAINES TECHNIQUES RECHERCHES (Int. Cl.5)**

E01F
F16F

Le présent rapport a été établi pour toutes les revendications

| Lieu de la recherche | Date d'achèvement de la recherche | Examinateur |
|---|---|---|
| LA HAYE | 19 AVRIL 1991 | VERVEER D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P0402)